# EUROPEAN PATENT SPECIFICATION

(11) **EP 4 233 365 B1**
(45) Date of publication and mention of the grant of the patent: **09.04.2025**
(21) Application number: 21766177.6
(22) Date of filing: 26.08.2021
(51) Int. Cl.: H04W 36/00, G06N 20/00, H04W 24/08

(54) **SYSTEMS, APPARATUSES AND METHODS FOR COGNITIVE SERVICE DRIVEN HANDOVER OPTIMIZATION**
SYSTEME, VORRICHTUNGEN UND VERFAHREN ZUR KOGNITIVEN DIENSTGESTEUERTEN HANDOVER-OPTIMIERUNG
SYSTÈMES, APPAREILS ET PROCÉDÉS D'OPTIMISATION DE TRANSFERT ENTRAÎNÉ PAR UN SERVICE COGNITIF

(30) Priority: 21.10.2020 US 202063094527 P
(43) Date of publication of application: 30.08.2023
(73) Proprietor: Nokia Technologies Oy, 02610 Espoo (FI)
(72) Inventor: ABDELKADER, Abdelrahman, 80333 Munich (DE); MWANJE, Stephen, 84405 Dorfen (DE)
(74) Representative: Script Intellectual Property LLP
(86) International application number: PCT/EP2021/073569
(87) International publication number: WO 2022/083923

(56) References cited:
- WO-A1-2016/072893
- WO-A1-2020/175866
- WO-A1-2022/034114
- US-A1- 2018 262 924
- "3rd Generation Partnership Project; Technical Specification Group Services and System Aspects; Management and orchestration; Study on enhancement of Management Data Analytics (MDA) (Release 17)", 8 September 2020 (2020-09-08), XP051932555, Retrieved from the Internet <URL:https://ftp.3gpp.org/tsg_sa/WG5_TM/TSGS5_132e/Docs/S5-204506.zip 28.809-050.doc> [retrieved on 20200908]

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems, apparatuses and/or methods for facilitating cognitive service driven handover in such communications systems.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G wireless systems refer to the next generation (NG) of radio systems and network architecture. A 5G system is mostly built on a 5G new radio (NR), but a 5G (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 5G, which can provide both NR and LTE (and LTE-Advanced) radio accesses. It is noted that, in 5G, the nodes that can provide radio access functionality to a user equipment (i.e., similar to the Node B, NB, in UTRAN or the evolved NB, eNB, in LTE) may be named next-generation NB (gNB) when built on NR radio and may be named next-generation eNB (NG-eNB) when built on E-UTRA radio.

US2018/262924 discloses a network data analytics function, that can receive a request from a policy and control function for a policy input for a packet data unit (PDU) session associated with a network node, can transmit a request for measurement data to the network node, can receive a measurement data response and transmit a policy input to the PCF based on the measurement data response.

WO2016/072893 discloses a method for managing a handover of a user equipment from a first to a second radio network node). Before the handover, the network node obtains a set of parameters, relating to radio measurements performed by the user equipment towards the second radio network node. After the handover, the network node receives, from the second radio network node, a report including a quality of service value relating to quality of service for the user equipment. Subsequently, the network node trains a set of models for prediction of the quality of service for the user equipment by adapting each model of the set of models using the quality of service value of the report as a ground truth to be predicted given a respective subset of the set of parameters, which respective subset is taken as input to said each model.

WO2020/175866 discloses a method of selectively deploying an application for facilitating quality-of-experience (QoE) in terms of streaming multimedia-content in a networking-environment comprising a user-equipment (UE) and a networking-node provided with a predictive-analysis module. The method comprises capturing parameters pertaining to UE from amongst at-least one of a version of the predictive-analysis module with respect to the UE, a current processor-occupancy within the UE, a power-level within the UE, network-conditions pertaining to the access-network etc. Thereafter, one or more of the captured-parameters and the observed network- conditions is analysed. Based on the analysis, inferring is drawn for selecting between the predictive-analysis model of the UE and of the networking-node for thereby enabling a customized- streaming of multimedia-content at the UE.

### SUMMARY OF THE INVENTION

The invention consists of two methods for facilitating cognitive service driven handover as well as a corresponding network node and a corresponding user equipment according to the independent claims. Preferred embodiments are set out in the dependent claims.

### BRIEF DESCRIPTION OF THE DRAWINGS:

For proper understanding of example embodiments, reference should be made to the accompanying drawings, wherein:
Fig. 1 illustrates an example block diagram depicting the training of a QoE model, according to an embodiment;
Fig. 2 illustrates an example block diagram depicting the training of a quality of experience (QoE) model using path-aware cognitive handover optimization (PACHO) as a radio specific handover optimization algorithm, according to an embodiment;
Fig. 3 illustrates an example of a cognitive service driven handover (CSDHO) quality of experience (QoE) model, according to an embodiment;
Fig. 4 illustrates an example of a cognitive service driven handover (CSDHO) quality of experience (QoE) model, according to an embodiment;
Fig. 5 illustrates an example block diagram depicting an inference of handover settings using the QoE model at the UE and active model training and fine tuning of the PACHO and QoE model, according to an embodiment;
Fig. 6 illustrates an example service evaluation using a utility function, according to an embodiment;
Fig. 7 illustrates an example signaling flow diagram, according to an embodiment;
Fig. 8A illustrates an example flow diagram of a method, according to an embodiment;
Fig. 8B illustrates an example flow diagram of a method, according to an embodiment;
Fig. 9A illustrates an example block diagram of an apparatus, according to an embodiment; and
Fig. 9B illustrates an example block diagram of an apparatus, according to an embodiment.

### DETAILED DESCRIPTION:

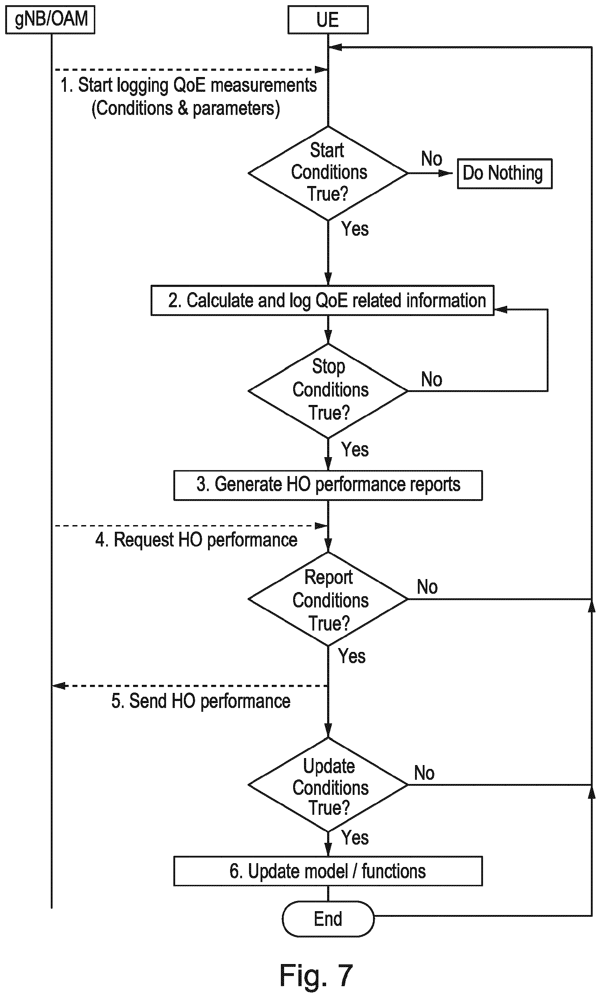

Figures 7-9 refer to embodiments of the invention; the other figures are useful for illustrative purposes.

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for supporting cognitive service driven handover, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Network automation is an important part of the efforts to improve network operability, for example, through automation-related standardization currently being done in 3^{rd} generation partnership project (3GPP). Extreme densification of the network, heterogeneity of access technologies, resource optimization functions on multiple network levels and the scarcity of physical and radio resources call for efficient network management methods that can better automate the complex interactions among network entities.

Cognitive autonomous networks (CAN) may improve the functionality and autonomy in network operations, administration and management (OAM) entities by increasing the flexibility and complexity of a radio network.

CANs are able to achieve a high degree of efficiency in network operations by utilizing the capabilities of machine learning (ML) and artificial intelligence (AI). This can be done due to the ability of ML and AI to learn the optimal behavior from the environment and previous experience in order to achieve a specific required output or maintain a minimum performance level. By applying ML and/or AI to cognitive functions, CANs may take higher level goals, derive appropriate performance targets, learn from the environment through individual or shared experiences, learn to contextualize operating conditions, and learn optimal behavior appropriate to a specific environment and contexts.

One of the important network operations is handover (HO). Adjusting HO settings is a central process to the continuity and quality of services running on a user equipment (UE) during the HO process. These settings should be optimized depending on the position and movement, as well as the service running on the UE, at the time of the HO.

Certain example embodiments described herein are able to take advantage of the powerful capabilities of ML in order to personalize each HO to the mobility specifications of the UE, as well as the services running in real-time. Hence, example embodiments result in a seamless HO from the UE perspective due to the absence of degradations in quality of experience (QoE) while also avoiding traditional radio link failures (RLFs) and ping pong HOs.

Current HO mechanisms are event triggered actions. These events focus mainly on the reference signal received power (RSRP) of the serving cell and the neighbouring cells (e.g., possible target cells for the HO). Then, the best target cell for a HO can be selected based on the optimal HO parameters (i.e., time-to-trigger (TTT), cell individual offset (CIO)) set by a mobility robustness optimization (MRO) algorithm. Once a specific HO from cell A to cell B is completed, it is evaluated as a successful HO based on the radio performance of the UE being served by cell B. Hence, if no radio link failure (RLF), ping pong HOs or excessive HOs per minute are reported, then a HO will be reported as successful. Performance statistics on the HOs from cell A to cell B can be used by the MRO algorithm to adjust the HO parameters to be applied by future UEs moving from Cell A to Cell B under the same conditions.

Thus, traditional HO mechanisms attempt the adjustment of HO settings (i.e. TTT, CIO) arbitrarily on a cell wide level by observing the historical HO events in the addressed cell. This approach improves the average HO performance in the entire cell but not necessarily the individual HO events since each part of the cell boundary might require specific HO settings. Choosing the appropriate settings is key for the seamless continuity of service on the UE during a HO event. On the one hand, if the TTT is chosen too small, the HO may be triggered too early and may result in a ping pong behavior between the current cell and target cells. On the other hand, if the TTT is chosen too large, then the HO event will be too late and may result in a RLF.

While simple, the traditional HO approach assumes that, for the UE, only the signal quality matters. In legacy cellular networks, this proved effective due to the limited portfolio of services and applications running on the UE, such that having a good signal quality resulted in an uninterrupted service for the user. However, in 5G networks, different applications and use cases can specify different minimum requirements on the service level or quality (i.e., throughput, latency, CPU capacity, reliability). This calls for a change in how successful HOs are evaluated while changing how HOs are managed and optimized to accommodate the real-time UE minimum service requirements. Furthermore, a goal may include performing the HO that maximizes the QoE for the UE while avoiding RLFs and ping pong HOs.

One example embodiment includes a cognitive service-driven handover optimization module (CSDHO) that can be used on top of any handover algorithm or process that optimizes radio performance aspects of the handover process. Certain embodiments may take advantage of path-aware cognitive handover optimization (PACHO) techniques in describing the operation of CSDHO. PACHO procedures may train machine-learning models to learn user paths and optimal handover settings, such as CIO and TTT, for particular paths and related speeds. These optimal handover settings may then factor into evaluations of handover target candidate cells and handover points, using legacy handover processes and/or conditional handover procedures. In addition, PACHO procedures may learn optimal target cell and handover points when configured with high inference frequencies, along with higher signaling and/or computational loads. Learning optimal handover settings, such as CIO and TTT, allows PACHO to evaluate target candidates and handover points using legacy handover logic.

According to an embodiment, a CSDHO may be configured to evaluate the success of a HO in a comprehensive manner, while taking into consideration the radio characteristics such as RLF and ping pong HOs, as well as service dependent QoE. This QoE may be defined for specific services. For example, Voice over IP (VoIP) is heavily affected by latency, while data transfer is mostly affected by throughput. This allows certain embodiments to evaluate each HO individually depending on corresponding service attributes. In one embodiment, by applying this service driven HO management to PACHO or any other radio driven handover optimization algorithm or technique, a different ML-based QoE model can be trained for each service.

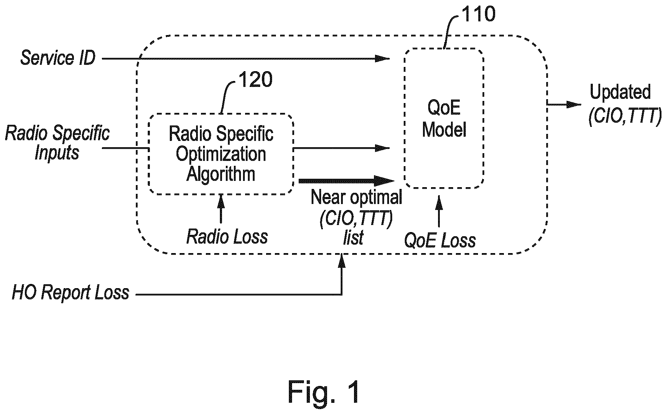

Fig. 1 illustrates an example block diagram depicting the training of a QoE model 110 using an existing trained radio specific optimization algorithm 120. Training is typically performed in the radio access network (RAN) or the OAM as shown in Fig. 1, which results in a compact QoE model 110 that can be downloaded on to the UE and used directly by inputting the service identifier (ID) and the input parameters required by the radio specific handover optimization algorithm used, e.g., PACHO.

All models can be available at the UE and the appropriate model may be chosen depending on the real-time service running on the UE, with data service being the default model. Moreover, more models can be added when more services are identified and defined by 3GPP thereby providing a highly scalable solution.

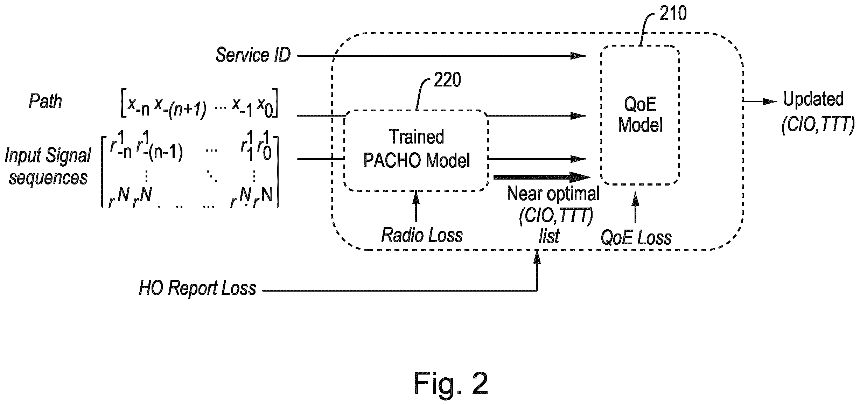

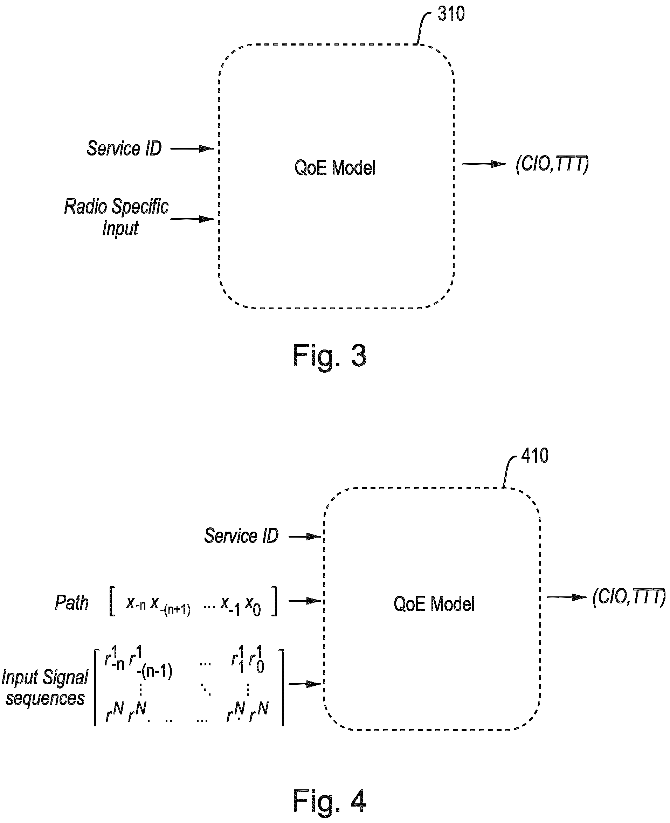

Fig. 2 illustrates an example block diagram depicting the training of a QoE model 210 using PACHO 220 as a radio specific HO optimization algorithm. In particular, Fig. 2 illustrates the inputs and outputs of the QoE model 210 operating on the UE to optimize HO parameters. For instance, in the example of Fig. 2, PACHO 220 may receive path, input signal sequences, and/or radio loss as input, and may output a near optimal list of CIO and/or TTT to the QoE model 210. The QoE model 210 may then output updated CIO and/or TTT. Fig. 3 and Fig. 4 illustrate examples of a CSDHO QoE model 310 and CSDHO QoE model 410, respectively, that may take advantage of PACHO as a radio specific optimization algorithm running on the UE.

According to certain embodiments, using ML, PACHO can identify the possible paths that the UE is most likely to take and the corresponding list of near-optimal acceptable HO settings from a radio-perspective. In an embodiment, as illustrated in the examples of Figs. 2-4, a QoE model may receive radio specific inputs together with a list of acceptable HO settings (output of PACHO) and may select one of the acceptable HO settings to perform the HO. For example, in one embodiment, the QoE model may be configured to select the highest ranked HO setting from the list of acceptable HO settings.

In some embodiments, after performing the HO, the UE may use performance evaluation functions to measure the loss and/or gain in QoE based on the service running on the UE and defined by a Service ID. For example, these functions can be used independent from the optimization model used and the parameters in those functions can be adjusted by the network.

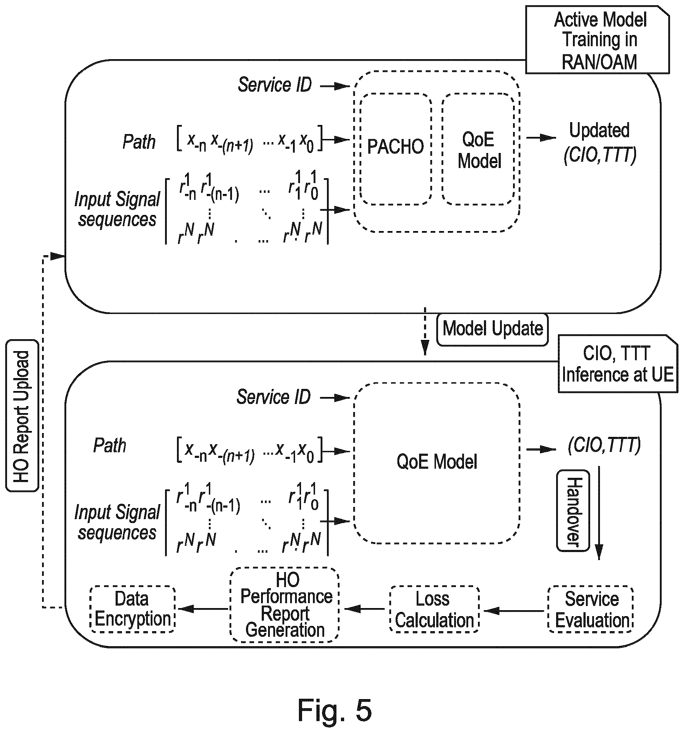

According to an embodiment, a HO performance report may be generated by the UE containing the QoE loss and/or gain associated with the HO settings produced by the QoE model. This data may be used for training the QoE model. The update and training of the radio specific HO optimization algorithm is independent, which supports the possibility to use CSDHO with any HO optimization algorithm (e.g., legacy or ML-based). In some embodiments, the HO performance report may be encrypted and sent to the network while maintaining the anonymity of the user and privacy of location and service information. According to an embodiment, the active training of CSDHO may use handover performance reports from multiple UEs to update the QoE model (i.e., the ranking of different HO settings based on QoE measurements provided in the report). Fig. 5 illustrates an example block diagram depicting an inference of HO settings using the QoE model at the UE and active model training and fine tuning of the PACHO and QoE model in the RAN/OAM, according to an example embodiment.

According to example embodiments, inference may be separated from model training and can be performed directly in the UE, as illustrated in Fig. 1 and Fig. 2. For example, the UE may use real-time GPS and/or signal information in order to infer the optimal handover settings. Using the inferred parameters, the UE may perform the HO while logging both radio and service measurements. For instance, the relevant GPS and/or signal information may include, but is not limited to: GPS historical coordinates, corresponding radio characteristics (i.e., SINR, RSRP, RLFs), and/or service-related characteristics (i.e., service type, throughput, latency, jitter). In an embodiment, when a certain time period has elapsed after a HO is performed, the HO may be evaluated. This time period can be adjusted by the network dynamically to monitor ping-pong handovers and possible deterioration in QoE post-handover, for example.

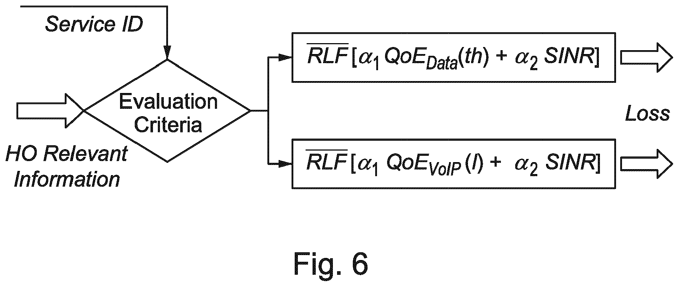

After a HO is performed, the service may be evaluated comprehensively using a utility function based on radio characteristics and/or service attributes, as illustrated in Fig. 6. Depending on the service running in the UE, an appropriate model for QoE is used. Similar services may be grouped together in order to reduce the dimensionality of the evaluation criteria. For example, in the case of data services, the QoE is mainly a function of throughput, while in the case of VoIP services the QoE is strongly affected by latency. More QoE models can be integrated into the evaluation criteria depending on the amount of different services running on the UE.

As illustrated in the example of Fig. 6, a utility function for the evaluation may assign weights (*α*₁ *, α*₂) to the radio and service parts. In one example, the total sum of these weights is equal to 1. Depending on the network status, these weights can be adjusted to focus more on QoE, for example in times of low traffic, or to give a priority to radio performance. Moreover, in the case of a radio link failure, the total utility is equal to zero because no service can be provided if a RLF is present.

According to an embodiment, in order to reduce the signaling from the UE to the network and limit the number of HO performance reports that may create congestion at the gNB, not all HOs are necessarily reported. In this case, based on the result of the evaluation of the HO, the UE may decide whether to send a corresponding report to the network or not. A sent report should improve the QoE model and prevent future UEs from experiencing a bad service scenario in the future. For example, in an embodiment, if the result of the evaluation is below a certain threshold, then the UE may send a HO performance report to the network. This threshold can be adjusted dynamically and may be small at the beginning of the active training in order to gather enough information about the performance of the model from many reports sent by multiple UEs. Later, the threshold can be increased to reduce the reports sent to the network and limit them to reports that are beneficial.

According to certain embodiments, loss values reported by the UE may be categorized into radio loss or QoE loss. For example, radio loss may include radio link performance including HO success/failure, RLF, and/or ping pong HO. This loss can be used to fine tune the trained radio specific handover optimization algorithm (in this case PACHO model) and optimize the list of acceptable HO settings produced and provided to the QoE model. QoE loss can be a soft measurement (i.e., on a scale from 1-5) or a hard measurement of QoE (i.e., acceptable versus unacceptable). This can be chosen to either maximize QoE or achieve a minimum acceptable QoE, respectively. The loss may be used to rank the different acceptable HO settings provided by PACHO according to their corresponding QoE.

In some embodiments, the loss values may be separated such that the QoE related measurements may be reported in the HO performance report generated by the UE. This includes relevant information needed to update the QoE model, such as service ID and QoE measurements. Radio specific data, such as path/location sequence and RSRP values before and after the HO event, can be reported in a different report depending on the used HO optimization method.

According to an embodiment, after the HO performance report is generated, it may be encrypted and uploaded to the RAN. An anonymization process can take place at the gNB that makes sure the real-time location of the user remains private. Moreover, in certain embodiments, reports can be sent when the device is not active or with a random delay between the HO event and the reporting.

Initially, data collection, labelling and model training may be performed for radio specific handover optimization algorithm (e.g., PACHO model). This ensures that a list of radio-specific acceptable HO settings is suggested to the QoE model. After that, the QoE model can be trained further actively by testing each HO setting and evaluating the corresponding QoE in the UE. The training can be performed by setting a certain probability of exploring versus exploiting. This ensures the constant improvement of the model and an acceptable QoE at the same time.

Using information from multiple HO performance reports provided by multiple UEs, the network can update the model and download it to the UE. Fig. 5 illustrates how the active model training is achieved in the case of using PACHO as a radio specific HO optimization algorithm. Radio loss may be used to actively fine tune the trained PACHO model, while the QoE loss is used to update the QoE model and make sure that future UEs on the same path in the future are provided a better service through more optimized HO settings.

Fig. 7 illustrates an example flow diagram of a signaling and SDCHO method, according to an example embodiment. Fig. 7 illustrates an example depicting signaling between a gNB/OAM and a UE, according to an example embodiment. As illustrated in the example of Fig. 7, at 1, the gNB/OAM transmits a message to the UE to start performing and/or logging QoE measurements, which may include conditions and parameters relating to the QoE measurements. Furthermore, the network (e.g., gNB/OAM) configures multiple UEs to collect handover data to be used to train the QoE model (i.e., signaling the UEs to log required data). In an embodiment, the network may specify the exact conditions for the UE to start and/or stop logging the data. As one example, the conditions may include when RSRP drops below a certain threshold. According to an embodiment, the duration for the log may also be indicated by the network and can capture some time before and after a HO occurs. This indication can be performed through the control channel. In certain embodiments, this can also be done in the absence of a QoE model.

In an embodiment, the UE may determine whether the conditions for starting the QoE measurements is true. If the conditions are not true, then the UE may do nothing. If, however, the conditions for starting the QoE measurements is determined to be true, then the UE may, at 2, calculate and log QoE related information. Then, the UE may determine whether conditions for stopping the QoE measurements is true and, if not, then the UE may continue to calculate and log QoE related information. If, however, the UE determines that the conditions for stopping the QoE measurements are true, then the UE may, at 3, stop calculating the QoE related information and generate HO performance reports based on the calculated QoE related information.

According to certain embodiments, the logged QoE related data may include the service ID of the service running on the UE and the result of the QoE measurement function performed by the UE. In one example embodiment, QoE may be measured on a scale of 1-5. The scale can be increased and/or decreased by the network and this change can be signaled to the UE through the control channel. The data may be logged as a time-stamped observation matrix of service ID and QoE measurement. For purposes of illustration, Table 1 below shows one example of a time-stamped observation matrix that may be used to collect training data for SDCHO. It should be noted that Table 1 is just one example, and many other examples are possible according to certain embodiments. The radio specific HO data, which may be required by the HO optimization algorithm used, can be reported in a different report to preserve the modularity of the operation.

**TABLE 1**

| Time | Service ID | QoE |
|---|---|---|
| 10:09:32 | 1 | 4 |
| 10:09:33 | 1 | 2 |
| 10:09:34 | 1 | 2 |
| : | : | : |
| 10:09:41 | 1 | 3 |
| | | |

As further illustrated in the example of Fig. 7, at 4, the gNB/OAM transmits and the UE receives a request for HO performance. For example, in some embodiments, the network may signal one or more UEs to send HO performance data to be used to train the QoE model. This may be done after configuring the UE(s) to log the required data as discussed above. The signaling and/or sending of the HO performance data may be done through the control channel or the traffic channel, and may be flagged with a header indicating the nature of the payload being training data related to CSDHO. Depending on the size of the data, an appropriate channel can be selected. In the example of Fig. 7, after receiving the HO performance request, the UE may determine if reporting conditions are true. If the reporting conditions are not determined to be true, then the process may return to the beginning. If, however, it is determined that the reporting conditions are true, then the UE may transmit, at 5, a HO performance report to the gNB/OAM. For example, the HO performance report may include the time-stamp, service ID and QoE measurement, as discussed above.

As also illustrated in the example of Fig. 7, the UE may further determine whether conditions for updating the QoE model are true. If the update conditions are not true, then the process may return to the beginning. If, however, the update conditions are determined to be true, then the UE may, at 6, update the QoE model accordingly.

The data for training the QoE model may include the hash of the radio specific data (e.g., path and signal sequences in the case of PACHO) and the corresponding QoE measurements. Table 2 illustrates an example structure of training data entries derived from the observation matrix in the example of Table 1.

**TABLE 2**

| Radio specific data | | | | QoE data | |
|---|---|---|---|---|---|
| Data A | Data B | ... | Data N | Service ID | QoE measurement |
| .. | .. | .. | .. | 1 | 4 |
| .. | .. | .. | .. | 1 | 2 |
| .. | .. | .. | .. | 1 | 2 |

According to certain embodiments, the training data may be compiled from the observation matrix and the input data can be used in training the radio specific HO optimization algorithm. The compilation may be done in the gNB in which case the UE signals the basic observation matrix to the network. This makes it possible to change the radio specific HO optimization algorithm and conserve the modularity of the CSDHO method. This also allows the gNB to combine data sent by multiple UEs simultaneously.

Furthermore, the network or gNB signals the UE to receive the trained QoE model and then an initial download of the trained QoE model to the UE may be performed. The signaling is done first through the control channel and then model download may be done through traffic channels. Alternatively, the signaling and model download can be both done through traffic channels while indicating the nature of the model through header fields (e.g. update, new model).

It is noted that the HO performance evaluation, loss calculation, and/or HO performance report generation by the UE, as illustrated in the example of Fig. 7, can be used even in the absence of a QoE model. For example, data produced by these functions can be still sent to the network to provide training data for the QoE model before actual deployment. These functions may be configured by the network (e.g., by the gNB/OAM) to change parameters through the control channel. In some embodiments, the functions may also be shut down by the UE to conserve battery and a user may be able to opt-out on demand.

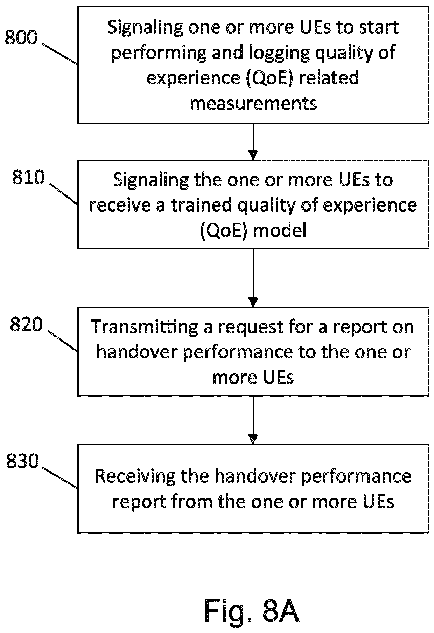

Fig. 8A illustrates an example flow chart of a method for supporting cognitive service driven handover, according to an embodiment. The flow diagram of Fig. 8A is performed by a network node in a communications system, such as LTE or 5G NR. In some example embodiments, the network entity performing the method of Fig. 8A may include or be included in a base station, access node, node B, eNB, gNB, NG RAN node, or the like. For instance, in one example embodiment, the method of Fig. 8A may be performed by a gNB or OAM entity, such as the gNB/OAM depicted in the example diagram of Fig. 7.

As illustrated in the example of Fig. 8A, the method includes at 800, signaling one or more UEs to start performing and logging quality of experience (QoE) related measurements. In an embodiment, the signaling 800 may include signaling an indication of start conditions for the at least one user equipment to start the performing and logging of the quality of experience (QoE) related measurements, and/or signaling an indication of stop conditions for the at least one user equipment to stop the performing and logging of the quality of experience (QoE) related measurements. According to an embodiment, the signaling 800 may include configuring the one or more UEs to collect handover data for use to train a quality of experience (QoE) model. In some embodiments, the signaling 800 may include signaling an indication of a duration for the logging of the quality of experience (QoE) related measurements. For example, the duration may at least capture some period of time before and after a handover of the one or more UEs occurs.

According to one embodiment, the method ,includes 810, signaling the one or more UEs to receive a trained quality of experience (QoE) model through at least one of a control channel or traffic channel. In other words, the signaling 810 includes transmitting or providing the trained QoE mode to the UE(s) via a control channel and/or traffic channel. It is noted that, in certain embodiments, the signaling 810 of the trained QoE model may be performed even in the absence of the signaling 800 to start performing or logging QoE related measurements. As such, in some embodiments, the signaling 810 of the trained QoE model to the UE(s) may be performed as a standalone method. In an embodiment, the trained QoE model may be trained with historically collected data from one or more UEs, which may the same and/or different from the UE(s) to which the QoE model is provided.

As further illustrated in the example of Fig. 8A, the method includes, at 820, transmitting a request for a report on handover performance to the one or more UEs. The method includes, at 830, receiving the handover performance report from the one or more UEs, which includes at least one service identifier of a service running on the one or more UEs and the quality of experience (QoE) related measurements. According to certain embodiments, the handover performance measurement report may include a time-stamped observation matrix including the at least one service identifier of the service running on the one or more UEs and the quality of experience (QoE) related measurements. In some embodiments, the receiving 830 of the handover performance report may include receiving the handover performance report through at least one of a control channel and/or traffic channel. According to one embodiment, the method may also include receiving radio specific handover data from the one or more UEs. According to an embodiment, the QoE model may be configured to be trained using at least a hash of the radio specific handover data and corresponding quality of experience (QoE) related measurements received from the one or more UEs.

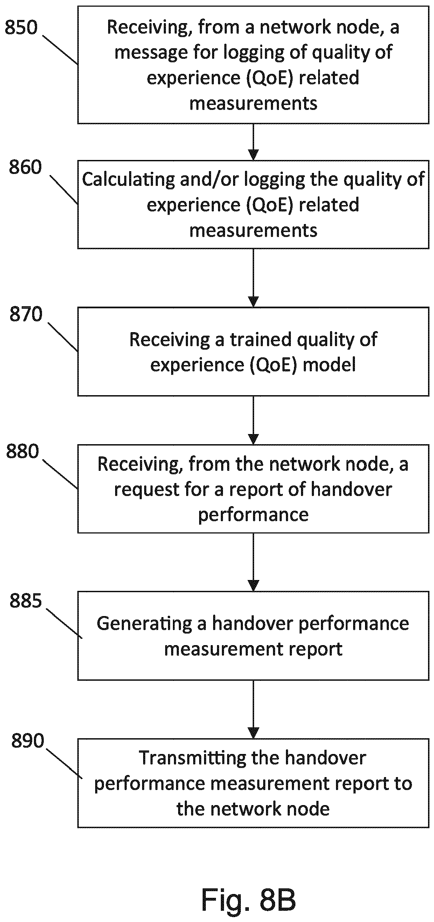

Fig. 8B illustrates an example flow diagram of a method relating to supporting cognitive service driven handover, according to an embodiment. The method is performed at a UE.

As illustrated in the example of Fig. 8B, the method includes at 850, receiving, from a network node, a message for logging of quality of experience (QoE) related measurements at the user equipment. In an embodiment, the receiving 850 of the message for logging of quality of experience (QoE) related measurements may include receiving an indication of one or more start conditions for the user equipment to start the performing and logging of the quality of experience (QoE) related measurements, and/or receiving an indication of one or more stop conditions for the user equipment to stop the performing and logging of the quality of experience (QoE) related measurements. According to an embodiment, the receiving 850 of the message for logging of quality of experience (QoE) related measurements may include receiving an indication of a duration for the logging of the quality of experience (QoE) related measurements, for example, where the duration may at least capture some period of time before and after a handover of the user equipment occurs.

The method includes, at 860, measuring, calculating and logging the quality of experience (QoE) related measurements. According to one example, the calculating 860 may include starting the calculating and logging of the quality of experience (QoE) related measurements when the start conditions are met, and stopping the calculating and logging of the quality of experience (QoE) related measurements when the stop conditions are met. In an embodiment, the calculating 860 of the quality of experience (QoE) related measurements may include using performance evaluation functions to measure loss or gain in quality of experience (QoE) based on the service running on the user equipment as defined by the service identifier.

The method includes, at 870, receiving a trained quality of experience (QoE) model, from the network node, through at least one of a control channel and/or traffic channel and using the trained quality of experience (QoE) model to select or compute applicable handover settings, and applying the handover settings to determine and/or perform one or more handovers at the user equipment.

The method further includes, at 880, receiving, from the network node, a request for a report of handover performance and, at 885, generating a handover performance measurement report that includes at least one service identifier of a service running on the user equipment and the quality of experience (QoE) related measurements. In an example embodiment, the generating 885 may include generating a handover performance measurement report containing a loss or gain in quality of experience (QoE) associated with the handover settings.

In one example embodiment, the method may optionally include, at 890, transmitting the handover performance measurement report to the network node, e.g., based on a result of an evaluation of the handover of the user equipment. It is noted that, according to some embodiments, not every generated handover performance measurement report need be transmitted to the network node. According to an embodiment, the handover performance report may be encrypted and configured to maintain anonymity of a user of the user equipment and privacy of location and service information. In one embodiment, the handover performance measurement report may include a time-stamped observation matrix comprising the at least one service identifier of the service running on the at least one user equipment and the quality of experience (QoE) related measurements.

In some example embodiments, the method may include using real-time global positioning system (GPS) and/or signal information to infer optimal handover settings, and performing, using the inferred parameters, the handover while logging radio and service measurements. According to one embodiment, the method may include transmitting radio specific handover data to the network node.

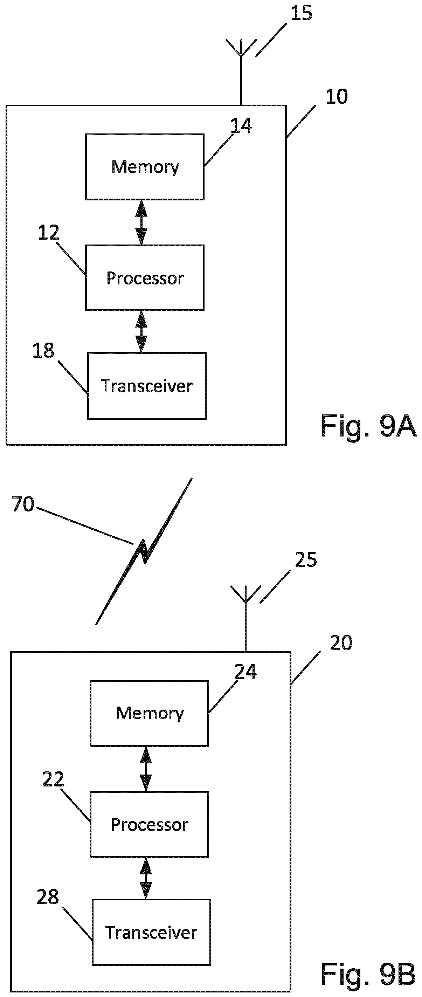

Fig. 9A illustrates an example of an apparatus 10 according to an embodiment. The apparatus 10 is a network node. For example, apparatus 10 may be a satellite, base station, a Node B, an evolved Node B (eNB), 5G Node B or access point, next generation Node B (NG-NB or gNB), transmission receive point (TRP), high altitude platform station (HAPS), integrated access and backhaul (IAB) node, and/or WLAN access point, associated with a radio access network, such as a LTE network, 5G or NR. In one example embodiment, apparatus 10 may be a gNB or OAM entity.

It should be understood that, in some example embodiments, apparatus 10 may be comprised of an edge cloud server as a distributed computing system where the server and the radio node may be stand-alone apparatuses communicating with each other via a radio path or via a wired connection, or where they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 9A.

As illustrated in the example of Fig. 9A, apparatus 10 includes a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, or any other processing means, as examples.

While a single processor 12 is shown in Fig. 9A, multiple processors may be utilized according to other example embodiments. For example, it should be understood that, in certain embodiments, apparatus 10 may include two or more processors that may form a multiprocessor system (e.g., in this case processor 12 may represent a multiprocessor) that may support multiprocessing. In some embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 further includes a memory 14 (internal or external), which may be coupled to processor 12, for storing information and instructions that may be executed by processor 12. In particular, memory 14 comprises computer program code that, when executed by processor 12, cause the apparatus to perform the method of any of figures 7-8. 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media, or other appropriate storing means. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and/or receive information. The transceiver 18 may include, for example, a plurality of radio interfaces that may be coupled to the antenna(s) 15, or may include any other appropriate transceiving means. In certain embodiments, the radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and/or the like. According to an example embodiment, the radio interface may include components, such as filters, converters (e.g., digital-to-analog converters and the like), mappers, a Fast Fourier Transform (FFT) module, and/or the like, e.g., to generate symbols or signals for transmission via one or more downlinks and to receive symbols (e.g., via an uplink).

As such, transceiver 18 may be configured to modulate information on to a carrier waveform for transmission by the antenna(s) 15 and to demodulate information received via the antenna(s) 15 for further processing by other elements of apparatus 10. In other example embodiments, transceiver 18 may be capable of transmitting and receiving signals or data directly. Additionally or alternatively, in some embodiments, apparatus 10 may include an input device and/or output device (I/O device), or an input/output means.

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a base station, access point, Node B, eNB, gNB, TRP, HAPS, IAB node, WLAN access point, or the like. In one example embodiment, apparatus 10 may be a gNB and/or OAM entity. For example, in some embodiments, apparatus 10 may be configured to perform one or more of the processes depicted in any of the flow charts or signaling diagrams described herein, such as those illustrated in Fig. 7 or Figs. 8A-8B. In some embodiments, as discussed herein, apparatus 10 may be configured to perform a procedure relating to supporting and/or performing cognitive service driven handover, for example.

In some embodiments, apparatus 10 may be controlled by memory 14 and processor 12 to signal one or more UEs to start performing and logging quality of experience (QoE) related measurements. In an embodiment, apparatus 10 may be controlled by memory 14 and processor 12 to signal, to the UE(s), an indication of start conditions for the UE(s) to start the performing and logging of the quality of experience (QoE) related measurements, and/or signaling an indication of stop conditions for the UE(s) to stop the performing and logging of the quality of experience (QoE) related measurements. According to an embodiment, apparatus 10 may be controlled by memory 14 and processor 12 to configure the one or more UEs to collect handover data for use to train a quality of experience (QoE) model. In some embodiments, apparatus 10 may be controlled by memory 14 and processor 12 to signal an indication of a duration for the logging of the quality of experience (QoE) related measurements. For example, the duration may at least capture some period of time before and after a handover of the one or more UEs occurs.

According to one embodiment, apparatus 10 may be controlled by memory 14 and processor 12 to signal the one or more UEs to receive a trained quality of experience (QoE) model through at least one of a control channel or traffic channel. In other words, in an embodiment, apparatus 10 may be controlled by memory 14 and processor 12 to transmit or provide the trained QoE mode to the UE(s) via a control channel and/or traffic channel. It is noted that, in certain embodiments, the trained QoE model may be provided to the UE(s) even in the absence of the signaling to start performing or logging QoE related measurements. In an embodiment, apparatus 10 may be controlled by memory 14 and processor 12 to train the QoE model using historically collected data from one or more UEs, which may the same and/or different from the UE(s) to which the QoE model is provided.

As further illustrated in the example of Fig. 8A, apparatus 10 may be controlled by memory 14 and processor 12 to transmit a request for a report on handover performance to the one or more UEs. In an embodiment, apparatus 10 may be controlled by memory 14 and processor 12 to receive the handover performance report from the one or more UEs. In one example, the handover performance report may include at least one service identifier of a service running on the one or more UEs and the quality of experience (QoE) related measurements. According to certain embodiments, the handover performance measurement report may include a time-stamped observation matrix including the at least one service identifier of the service running on the one or more UEs and the quality of experience (QoE) related measurements. In some embodiments, apparatus 10 may be controlled by memory 14 and processor 12 to receive the handover performance report through at least one of a control channel and/or traffic channel. According to one embodiment, apparatus 10 may be controlled by memory 14 and processor 12 to receive radio specific handover data from the one or more UEs. According to an embodiment, apparatus 10 may be controlled by memory 14 and processor 12 to train the QoE model using at least a hash of the radio specific handover data and corresponding quality of experience (QoE) related measurements received from the one or more UEs.

Fig. 9B illustrates an example of an apparatus 20 according to another embodiment. Apparatus 20 is a user equipment, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

Apparatus 20 includes one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 9B.

As illustrated in the example of Fig. 9B, apparatus 20 comprises a processor 22 (or processing means) for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 9B, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 further comprises a memory 24 (internal or external), which may be coupled to processor 22, for storing information and instructions that may be executed by processor 22. In particular, memory 24 comprises computer program code that, when executed by processor 22, cause the apparatus 20 to perform the method of any of figures 7-8. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media, or other storage means. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 (or transceiving means) configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device) or input/output means. In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes or procedures depicted in any of the flow charts or signaling diagrams described herein, such as that illustrated in Fig. 7 or Figs. 8A-8B. In certain embodiments, apparatus 20 may be configured to perform or execute procedure(s) relating to supporting and/or performing cognitive service driven handover, for instance.

For example, in some embodiments, apparatus 20 may be controlled by memory 24 and processor 22 to receive, from a network node, a message for logging of quality of experience (QoE) related measurements at apparatus 20. In an embodiment, apparatus 20 may be controlled by memory 24 and processor 22 to receive an indication of one or more start conditions for the apparatus 20 to start the performing and logging of the quality of experience (QoE) related measurements, and/or to receive an indication of one or more stop conditions for the apparatus 20 to stop the performing and logging of the quality of experience (QoE) related measurements. According to an embodiment, apparatus 20 may be controlled by memory 24 and processor 22 to receive an indication of a duration for the logging of the quality of experience (QoE) related measurements, for example, where the duration may at least capture some period of time before and after a handover of the apparatus 20 occurs.

In an embodiment, apparatus 20 may be controlled by memory 24 and processor 22 to measure, calculate and/or log the quality of experience (QoE) related measurements. According to one example, apparatus 20 may be controlled by memory 24 and processor 22 to start to calculate and log of the quality of experience (QoE) related measurements when the start conditions are met, and to stop calculating and logging of the quality of experience (QoE) related measurements when the stop conditions are met. In an embodiment, apparatus 20 may be controlled by memory 24 and processor 22 to use performance evaluation functions to measure loss or gain in quality of experience (QoE) based on the service running on the apparatus 20 as defined by the service identifier.

In one embodiment, apparatus 20 may be controlled by memory 24 and processor 22 to receive a trained quality of experience (QoE) model, from the network node, through at least one of a control channel and/or traffic channel. In an embodiment, apparatus 20 may be controlled by memory 24 and processor 22 to use the trained quality of experience (QoE) model to select or compute applicable handover settings, and to apply the handover settings to determine and/or perform one or more handovers at the apparatus 20.

According to an embodiment, apparatus 20 may be controlled by memory 24 and processor 22 to receive, from the network node, a request for a report of handover performance. In an embodiment, apparatus 20 may be controlled by memory 24 and processor 22 to generate a handover performance measurement report. For example, the handover performance report may include at least one service identifier of a service running on the apparatus 20 and the quality of experience (QoE) related measurements. In an example embodiment, apparatus 20 may be controlled by memory 24 and processor 22 to generate a handover performance measurement report containing a loss or gain in quality of experience (QoE) associated with the handover settings.

In one example embodiment, apparatus 20 may be controlled by memory 24 and processor 22 to transmit the handover performance measurement report to the network node, e.g., based on a result of an evaluation of the handover of the apparatus 20. It is noted that, according to some embodiments, not every generated handover performance measurement report need be transmitted to the network node. According to an embodiment, the handover performance report may be encrypted and configured to maintain anonymity of a user of the apparatus 20 and privacy of location and service information. In one embodiment, the handover performance measurement report may include a time-stamped observation matrix comprising the at least one service identifier of the service running on the apparatus 20 and the quality of experience (QoE) related measurements.

In some example embodiments, apparatus 20 may be controlled by memory 24 and processor 22 to use real-time global positioning system (GPS) and/or signal information to infer optimal handover settings, and to perform, using the inferred parameters, the handover while logging radio and service measurements. According to one embodiment, apparatus 20 may be further controlled by memory 24 and processor 22 to transmit radio specific handover data to the network node.

In some embodiments, an apparatus (e.g., apparatus 10 and/or apparatus 20) may include means for performing a method or any of the variants discussed herein, e.g., a method described with reference to Figs. 5 or 6. Examples of the means may include one or more processors, memory, and/or computer program code for causing the performance of the operation.

In view of the foregoing, certain example embodiments provide several technological improvements, enhancements, and/or advantages over existing technological processes and constitute an improvement at least to the technological field of wireless network control and management. For example, as discussed in detail in the foregoing, certain example embodiments provide a CSDCHO solution that can take into consideration the quality of the user's experience during HO and after. By making HO settings not only path specific, but also service specific, certain embodiments can ensure that services running on the UE are not affected by a HO by adjusting the HO settings accordingly. Furthermore, evaluating the QoE and/or HO performance at the UE reduces the amount of information the UE needs to send back to the network to improve the QoE model. In this case, the UE may send a soft measurement of QoE as one value on a specific scale (e.g., 1-5). Furthermore, this value can be an indication of a permanent QoE problem for all paths on a specific cell boundary for a specific service or all services which requires a network level action (e.g., assign more resources to a specific cell / sector / slice).

Example embodiments can be used on the UE for inferring HO settings and evaluating HOs without a high computational overhead. On the other hand, example embodiments do not require changing the current way handovers are executed by providing settings that are compatible with legacy HO. This backward compatibility with legacy systems guarantees minimal required system changes. In addition, certain embodiments are able to account for more service models which makes it highly scalable and dynamically adjustable.

Accordingly, the use of certain example embodiments results in improved functioning of communications networks and their nodes, such as base stations, eNBs, gNBs, and/or IoT devices, UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and may be executed by a processor.

In some example embodiments, an apparatus may include or be associated with at least one software application, module, unit or entity configured as arithmetic operation(s), or as a program or portions of programs (including an added or updated software routine), which may be executed by at least one operation processor or controller. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations required for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality of example embodiments may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality of example embodiments may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein may apply to both singular and plural implementations, regardless of whether singular or plural language is used in connection with describing certain embodiments. For example, an embodiment that describes operations of a single network node may also apply to embodiments that include multiple instances of the network node, and vice versa.

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the scope of the invention, which is defined by the appended claims.

## Claims

1. A method performed by a network node (10), the method comprising:
signaling (800) at least one user equipment to start performing and logging quality of experience, QoE, related measurements;
transmitting (820) a request for a report on handover performance to the at least one user equipment; and
receiving (830) the handover performance report from the at least one user equipment, wherein the handover performance report comprises at least one service identifier of a service running on the at least one user equipment and the quality of experience, QoE related measurements; wherein the signaling to start performing and logging QoE related measurements comprises configuring the at least one user equipment to collect handover data for use to train the quality of experience, QoE, model (110, 210, 310, 410); and
further comprising signaling (810) the at least one user equipment to receive a trained QoE model (110, 210, 310, 410) through at least one of a control channel or traffic channel.

2. The method according to claim 1, wherein the signaling to start performing and logging QoE related measurements comprises signaling an indication of at least one of: start conditions for the at least one user equipment to start the performing and logging of the quality of experience QoE, related measurements and stop conditions for the at least one user equipment to stop the performing and logging of the QoE related measurements.

3. The method according to any of claims 1-2, wherein the signaling to start performing and logging QoE related measurements comprises signaling an
indication of a duration for the logging of the QoE related measurements,
wherein the duration at least captures some period of time before and after a handover of the at least one user equipment occurs.

4. The method according to any of claims 1-3, wherein the handover performance measurement report comprises a time-stamped observation matrix comprising the at least one service identifier of the service running on the at least one user equipment and the QoE related measurements.

5. The method according to any of claims 1-4, wherein the receiving of the handover performance report comprises receiving the handover performance report through at least one of a control channel or traffic channel.

6. The method according to any of claims 1-5, further comprising receiving radio specific handover data from the at least one user equipment.

7. The method according to any of claims 1-6, wherein the QoE model (110, 210, 310, 410).is configured to be trained using at least a hash of the radio specific handover data and corresponding QoE related measurements received from the at least one user equipment.

8. A method performed by a user equipment (20), comprising:
receiving (850), from a network node, a message for logging of quality of experience, QoE, related measurements at the user equipment;
calculating and logging (860) the QoE related measurements;
receiving (880), from the network node, a request for a report of handover performance; and
generating (885) a handover performance measurement report, wherein the handover performance report comprises at least one service identifier of a service running on the user equipment and the QoE related measurements;
receiving (870) a trained QoE model (110, 210, 310, 410) through at least one of a control channel or traffic channel;
using the trained QoE model to select or compute applicable handover settings; and applying the handover settings to determine one or more handovers at the user equipment.

9. The method according to claim 8, transmitting the handover performance measurement report to the network node, based on a result of an evaluation of the handover of the user equipment.

10. The method according to claim 9, wherein the generating comprises generating a handover performance measurement report containing a loss or gain in QoE associated with the handover settings.

11. A network node (10), comprising:
at least one processor (12); and
at least one memory (14) comprising computer program code,
the computer program code configured when executed by the at least one processor, to cause the network node at least to perform a method according to any of claims 1- 7.

12. A user equipment (20), comprising:
at least one processor (22); and
at least one memory (24) comprising computer program code,
the computer program code configured when executed by the at least one processor, to cause the user equipment at least to perform a method according to any of claims 8 - 10.

## Patentansprüche

1. Verfahren, das von einem Netzwerkknoten (10) durchgeführt wird, wobei das Verfahren Folgendes umfasst:
Signalisieren (800) mindestens einer Teilnehmereinrichtung, mit dem Durchführen und Protokollieren von Messungen zu starten, die sich auf eine Erfahrungsqualität, QoE, beziehen;
Übertragen (820) einer Anforderung eines Berichts über eine Übergabeleistung zu der mindestens einen Teilnehmereinrichtung; und
Empfangen (830) des Übergabeleistungsberichts von der mindestens einen Teilnehmereinrichtung, wobei der Übergabeleistungsbericht mindestens eine Dienstkennung eines Dienstes, der auf der mindestens einen Teilnehmereinrichtung läuft, und die Messungen der auf die Erfahrungsqualität, QoE, bezogen sind, umfasst; wobei das Signalisieren zum Starten des Durchführens und des Protokollierens von Messungen die auf die QoE bezogen sind, das Auslegen der mindestens einen Teilnehmereinrichtung umfasst, Übergabedaten zur Verwendung zum Trainieren des Erfahrungsqualitäts(QoE)-Modells (110, 210, 310, 410) umfasst; und
das ferner das Signalisieren (810) der mindestens einen Teilnehmereinrichtung umfasst, über mindestens einen von einem Steuerkanal oder einem Verkehrskanal ein trainiertes QoE-Modell (110, 210, 310, 410) zu empfangen.

2. Verfahren nach Anspruch 1, wobei das Signalisieren, das Durchführen und Protokollieren von Messungen, die auf die QoE bezogen sind, das Signalisieren einer Anzeige von mindestens einem von Folgendem umfasst: Startbedingungen für die mindestens eine Teilnehmereinrichtung zum Starten des Durchführens und des Protokollierens der Messungen, die auf die Erfahrungsqualität, QoE, bezogen sind, und Stoppbedingungen für die mindestens eine Teilnehmereinrichtung zum Stoppen des Durchführens und des Protokollierens der QoE-bezogenen Messungen.

3. Verfahren nach einem der Ansprüche 1 bis 2, wobei das Signalisieren zum Starten des Durchführens und des Protokollierens von QoE-bezogenen Messungen das Signalisieren einer Anzeige einer Dauer für das Protokollieren der QoE-bezogenen Messungen umfasst,
wobei die Dauer mindestens eine gewisse Zeitperiode vor und nach einem Eintraten einer Übergabe der mindestens einen Teilnehmereinrichtung erfasst.

4. Verfahren nach einem der Ansprüche 1 bis 3, wobei der Übergabeleistungsmessbericht eine zeitgestempelte Beobachtungsmatrix umfasst, die die mindestens eine Dienstkennung des Dienstes, der auf der mindestens einen Teilnehmereinrichtung läuft, und die QoE-bezogenen Messungen umfasst.

5. Verfahren nach einem der Ansprüche 1 bis 4, wobei das Empfangen des Übergabeleistungsmessberichts das Empfangen des Übergabeleistungsmessberichts über mindestens einen von einem Steuerkanal oder einem Verkehrskanal umfasst.

6. Verfahren nach einem der Ansprüche 1 bis 5, das ferner das Empfangen von funkspezifischen Übergabedaten von der mindestens einen Teilnehmereinrichtung umfasst.

7. Verfahren nach einem der Ansprüche 1 bis 6, wobei das QoE-Modell (110, 210, 310, 410) dazu ausgelegt ist, unter Verwendung von mindestens einem Hash der funkspezifischen Übergabedaten und entsprechenden QoE-bezogenen Messungen, die von der mindestens einen Teilnehmereinrichtung empfangen werden, trainiert zu werden.

8. Verfahren, das von einer Teilnehmereinrichtung (20) durchgeführt wird und Folgendes umfasst:
Empfangen (850) einer Nachricht zum Protokollieren von Messungen, die auf eine Erfahrungsqualität, QoE, bezogen sind, an der Teilnehmereinrichtung von einem Netzwerkknoten;
Berechnen und Protokollieren (860) der QoE-bezogenen Messungen;
Empfangen (880) einer Anforderung eines Berichts einer Übergabeleistung vom Netzwerkknoten; und
Erzeugen (885) eines Übergabeleistungsmessberichts, wobei der Übergabeleistungsbericht mindestens eine Dienstkennung eines Dienstes, der auf der Teilnehmereinrichtung läuft, und die QoE-bezogenen Messungen umfasst;
Empfangen (870) eines trainierten QoE-Modells (110, 210, 310, 410) über mindestens einen von einem Steuerkanal oder einem Verkehrskanal;
Verwenden des trainierten QoE-Modells, um anwendbare Übergabeeinstellungen auszuwählen oder zu errechnen; und
Anwenden der Übergabeeinstellungen, um eine oder mehrere Übergaben an der Teilnehmereinrichtung zu bestimmen.

9. Verfahren nach Anspruch 8, Übertragen des Übergabeleistungsmessberichts auf Basis eines Ergebnisses einer Beurteilung der Übergabe der Teilnehmereinrichtung zum Netzwerkknoten.

10. Verfahren nach Anspruch 9, wobei das Erzeugen das Erzeugen eines Übergabeleistungsmessberichts umfasst, der einen Verlust oder einen Gewinn einer QoE enthält, der mit den Übergabeeinstellungen verknüpft ist.

11. Netzwerkknoten (10), der Folgendes umfasst:
mindestens einen Prozessor (12); und
mindestens einen Speicher (14), der einen Computerprogrammcode umfasst,
wobei der Computerprogrammcode dazu ausgelegt ist, wenn er von dem mindestens einen Prozessor ausgeführt wird, den Netzwerkknoten zu veranlassen, ein Verfahren nach einem der Ansprüche 1 bis 7 durchzuführen.

12. Teilnehmereinrichtung (20), die Folgendes umfasst:
mindestens einen Prozessor (22); und
mindestens einen Speicher (24), der einen Computerprogrammcode umfasst,
wobei der Computerprogrammcode dazu ausgelegt ist, wenn er von dem mindestens einen Prozessor ausgeführt wird, die Teilnehmereinrichtung zu veranlassen, ein Verfahren nach einem der Ansprüche 8 bis 10 durchzuführen.

## Revendications

1. Procédé réalisé par un nœud de réseau (10), le procédé comprenant les étapes suivantes :
commander (800) à au moins un équipement utilisateur de commencer à effectuer et à consigner des mesures liées à une qualité d'expérience, QoE ;
transmettre (820) une demande de rapport sur une performance de transfert intercellulaire à l'au moins un équipement utilisateur ; et
recevoir (830) le rapport de performance de transfert intercellulaire de l'au moins un équipement utilisateur, dans lequel le rapport de performance de transfert intercellulaire comprend au moins un identifiant de service d'un service s'exécutant sur l'au moins un équipement utilisateur et les mesures liées à une qualité d'expérience, QoE ; dans lequel la commande de commencer à effectuer et à consigner des mesures liées à une QoE comprend la configuration de l'au moins un équipement utilisateur pour qu'il collecte des données de transfert intercellulaire à utiliser pour entraîner le modèle de qualité d'expérience, QoE, (110, 210, 310, 410) ; et
comprenant en outre la commande (810) à l'au moins un équipement utilisateur de recevoir un modèle QoE (110, 210, 310, 410) entraîné par au moins un parmi un canal de contrôle et un canal de trafic.

2. Procédé selon la revendication 1, dans lequel la commande de commencer à effectuer et à consigner des mesures liées à une QoE comprend une commande indiquant : des conditions de début pour que l'au moins un équipement utilisateur commence à effectuer et à consigner les mesures liées à une qualité d'expérience, QoE, et/ou des conditions d'arrêt pour que l'au moins un équipement utilisateur arrête d'effectuer et de consigner les mesures liées à une QoE.

3. Procédé selon l'une des revendications 1 et 2, dans lequel la commande de commencer à effectuer et à consigner des mesures liées à une QoE comprend une commande indiquant une durée de la journalisation des mesures liées à une QoE, dans lequel la durée capture au moins une certaine période de temps avant et après l'occurrence d'un transfert intercellulaire de l'au moins un équipement utilisateur.

4. Procédé selon l'une des revendications 1 à 3, dans lequel le rapport de mesure de performance de transfert intercellulaire comprend une matrice d'observation horodatée comprenant l'au moins un identifiant de service du service s'exécutant sur l'au moins un équipement utilisateur et les mesures liées à une QoE.

5. Procédé selon l'une des revendications 1 à 4, dans lequel la réception du rapport de performance de transfert intercellulaire comprend la réception du rapport de performance de transfert intercellulaire par au moins un parmi un canal de contrôle et un canal de trafic.

6. Procédé selon l'une des revendications 1 à 5, comprenant en outre la réception de données de transfert intercellulaire radio spécifiques de l'au moins un équipement utilisateur.

7. Procédé selon l'une des revendications 1 à 6, dans lequel le modèle QoE (110, 210, 310, 410) est configuré pour être entraîné à l'aide d'au moins un hachage des données de transfert intercellulaire radio spécifiques et de mesures liées à une QoE correspondantes reçues de l'au moins un équipement utilisateur.

8. Procédé réalisé par un équipement utilisateur (20), comprenant les étapes suivantes :
recevoir (850), d'un nœud de réseau, un message pour consigner des mesures liées à une qualité d'expérience, QoE, au niveau de l'équipement utilisateur ;
calculer et consigner (860) des mesures liées à une QoE ;
recevoir (880), du nœud de réseau, une demande de rapport sur la performance de transfert intercellulaire ; et
générer (885) un rapport de mesure de performance de transfert intercellulaire, dans lequel le rapport de performance de transfert intercellulaire comprend au moins un identifiant de service d'un service s'exécutant sur l'équipement utilisateur et les mesures liées à une QoE ;
recevoir (870) un modèle QoE (110, 210, 310, 410) entraîné par au moins un parmi un canal de contrôle et un canal de trafic ;
utiliser le modèle QoE entraîné pour sélectionner ou calculer des paramétrages de transfert intercellulaire applicables ; et
appliquer les paramétrages de transfert intercellulaire pour déterminer un ou plusieurs transferts intercellulaires au niveau de l'équipement utilisateur.

9. Procédé selon la revendication 8, transmettant le rapport de mesure de performance de transfert intercellulaire au nœud de réseau sur la base d'un résultat d'une évaluation du transfert intercellulaire de l'équipement utilisateur.

10. Procédé selon la revendication 9, dans lequel la génération comprend la génération d'un rapport de mesure de performance de transfert intercellulaire contenant une perte ou un gain de QoE associés aux paramétrages de transfert intercellulaire.

11. Nœud de réseau (10), comprenant :
au moins un processeur (12) ; et
au moins une mémoire (14) comprenant un code de programme informatique,
le code de programme informatique étant configuré, lorsqu'il est exécuté par l'au moins un processeur, pour amener le nœud de réseau à effectuer au moins un procédé selon l'une des revendications 1 à 7.

12. Équipement utilisateur (20), comprenant :
au moins un processeur (22) ; et
au moins une mémoire (24) comprenant un code de programme informatique,
le code de programme informatique étant configuré, lorsqu'il est exécuté par l'au moins un processeur, pour amener l'équipement utilisateur à effectuer au moins un procédé selon l'une des revendications 8 à 10.
